# EUROPEAN PATENT SPECIFICATION

(11) **EP 1 884 134 B1**
(45) Date of publication and mention of the grant of the patent: **21.08.2013**
(21) Application number: 06733494.6
(22) Date of filing: 17.05.2006
(51) Int. Cl.: H04W 36/14, H04L 29/06, H04M 7/00, H04M 7/12

(54) **CONNECTION TYPE HANDOVER OF VOICE OVER INTERNET PROTOCOL CALL BASED ON RESOURCE TYPE**
HANDOVER DES VERBINDUNGSTYPS EINES VOICE-OVER-INTERNET-PROTOKOLL-ANRUFS AUF DER BASIS DES RESSOURCENTYPS
TRANSFERT INTERCELLULAIRE DE TYPE CONNEXION DE COMMUNICATION TELEPHONIQUE VOIX SUR IP EN FONCTION DU TYPE DE RESSOURCE

(30) Priority: 25.05.2005 US 684216 P; 12.12.2005 US 298939
(43) Date of publication of application: 06.02.2008
(73) Proprietor: Telefonaktiebolaget LM Ericsson (publ), 164 83 Stockholm (SE)
(72) Inventor: LARSSON, Anders, S-116 21 Stockholm (SE); BÄCKSTRÖM, Martin, S-185 38 Danderyd (SE)
(74) Representative: Kühn, Friedrich Heinrich
(86) International application number: PCT/SE2006/050124
(87) International publication number: WO 2006/126957

(56) References cited:
- GB-A- 2 318 252
- US-A- 5 987 032
- US-A1- 2005 195 762
- US-A1- 2006 140 113
- US-B1- 6 282 192
- JAEWON KANG ET AL: "Adaptive QoS control by toggling voice traffic between circuit and packet cellular networks", GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 6, 1 December 2003 (2003-12-01), pages 3498-3503, XP010677202, DOI: 10.1109/GLOCOM.2003.1258885 ISBN: 978-0-7803-7974-9
- KANG J.W. ET AL.: 'Adaptive QoS control by toggling voice traffic between circuit and packet cellular networks' GLOBECOM '03. 2003 - IEEE GLOBAL TELECOMMUNICATIONS CONFERENCE, CONFERENCE PROCEEDINGS vol. 7, 01 December 2003 - 05 December 2003, SAN FRANCISCO, pages 3498 - 3503, XP010677202

## Description

TECHNICAL FIELD

The present invention pertains to telecommunications, and particularly to Voice over Internet Protocol (VoIP).

RELATED ART AND OTHER CONSIDERATIONS

Voice over Internet Protocol (VoIP) in the mobile world means using a packet switched (PS) service for transport of Internet Protocol (IP) packets (which contain. e.g., Adaptive Mutli-Rate codec (AMR) speech frames) for normal mobile phone calls. In circuit-switched networks, network resources are static from the sender to receiver before the start of the transfer, thus creating a "circuit". The resources remain dedicated to the circuit during the entire transfer and the entire message follows the same path. In packet-switched networks, the message is broken into packets, each of which can take a different route to the destination where the packets are recompiled into the original message.

The packet switched (PS) service utilized for VoIP can be, for example. GPRS (General Packet Radio Service). EDGE (Enhanced Data Rates for Global Evolution), or WCDMA (Wideband Code Division Multiple Access). Each of these example services happen to be built upon the Global System for Mobile communications (GSM), a second generation ("2G") digital radio access technology originally developed for Europe. GSM was enhanced in 2.5G to include technologies such as GPRS. The third generation (3G) comprises mobile telephone technologies covered by the International Telecommunications Union (ITU) IMT-2000 family. The Third Generation Partnership
Project (3GPP) is a group of international standards bodies, operators, and vendors working toward standardizing WCDMA-based members of the IMT-2000.

EDGE (or Enhanced Data Rates for Global Evolution) is a 3G technology that delivers broadband-like data speeds to mobile devices. EDGE allows consumers to connect to the Internet and send and receive data, including digital images, web pages and photographs, three times faster than possible with an ordinary GSM/GPRS network. EDGE enables GSM operators to offer higher-speed mobile-data access, serve more mobile-data customers, and free up GSM network capacity to accommodate additional voice traffic.

EDGE provides three times the data capacity of GPRS. Using EDGE, operators can handle three times more subscribers than GPRS: triple their data rate per subscriber, or add extra capacity to their voice communications. EDGE uses the same TDMA (Time Division Multiple Access) frame structure, logic channel and 200kHz carrier bandwidth as GSM networks, which allows existing cell plans to remain intact.

In EDGE technology, a base transceiver station (BTS) communicates with a mobile station (e.g.. a cell phone, mobile terminal or the like, including computers such as laptops with mobile termination). The base transceiver station (BTS) typically has plural transceivers (TRX), with each transceiver having plural timeslots. Some of the transceivers (TRX) are capable of "hopping", e.g., frequency hopping. Frequency hopping is a process in which the data signal is modulated with a narrowband carrier signal that "hops" in a random but predictable sequence from frequency to frequency as a function of time over a wide band of frequencies. In GSM a channel such as the broadcast control channel (BCCH) must (in practice) be on a non-hopping transceiver.

A typical GSM network cell configuration has one of the transceivers of a base transceiver station (BTS) configured as non-hopping, and puts the BCCH on the non-hopping transceiver. As the BCCH must be configured with a low frequency reuse, the whole transceiver gets a very good carrier to interference ratio C/I. The rest of the non-hopping transceiver (e.g.. the remaining 6-7 timeslots of the non-hopping transceiver) can be configured (as available) for EDGE. These non-hopping transceiver timeslots will (thanks to the good C/I) provide very high bitrate, as the bitrate in EDGE varies depending on the C/I.

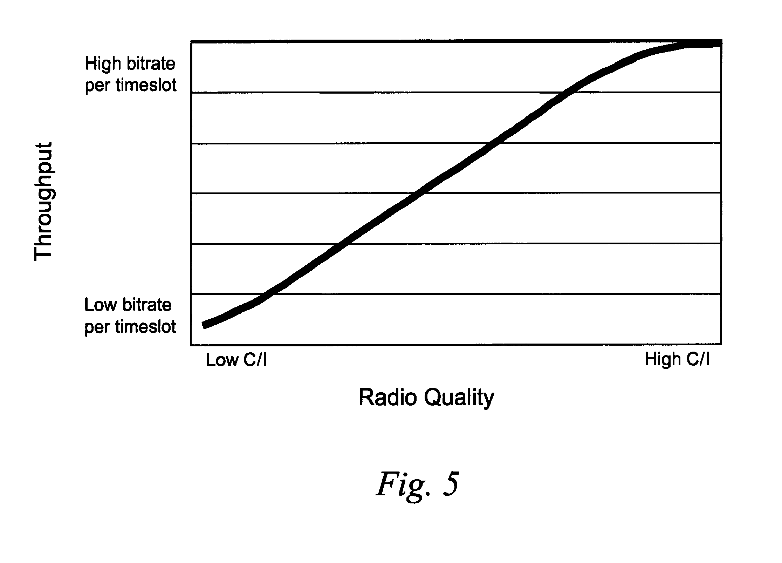

The other transceivers in the cell arc typically configured as hopping and planned with a very tight reuse for maximum network capacity from the available frequency spectrum. These timeslots will (due to the lower C/I) provide much lower bitrate per timeslot since (as stated before) the bitrate in EDGE varies depending on C/I. Fig. 5 shows generally throughput (bitrate) as being a function of radio quality (C/I).

VoIP may be more hardware efficient than a circuit switched CS connection on the non-hopping transceiver with the BCCH. Such efficiency advantage is a result of the higher C/I for which the BCCH transmitter is frequency planned via. e.g., frequency reuse (e.g., greater distance between cells using the same frequency). For example, more users could be served on a same number of timeslots as compared to circuit switched connections. However, a significant problem can develop in that VoIP may be less hardware efficient than CS on the hopping TRXs as a result of the lower radio quality (C/I) of the hopping TRXsSo, while VoIP may be beneficial on one (non-hopping) transceiver of a base transceiver station (BTS), VoIP may not be beneficial on another (hopping) transceiver.

In the early or introductory days of VoIP, it is expected that many users will upgrade from an old circuit switched phone to a VoIP phone. It is likely that each such upgrading user will bring a benefit for the operator in terms of increased hardware efficiency. But eventually at a certain VoIP penetration, each user upgrading from an old circuit switched phone to a VoIP phone will bring a penalty to the operator in terms of decreased hardware efficiency.
GB2318252 discloses a frequency allocation system for a cellular radio network of the type providing both frequency hopping and non-hopping channels in which allocation of channels is performed on the basis of the quality of transmission of a call. This permits a frequency hopping channel to be used where the likelihood of interference is highest, substantially reducing the average interference level of calls.
In paper "Adaptive QoS control by toggling voice traffic between circuit and packet cellular networks", to Jaewon Kang et al. and published 1 December 2003 at GLOBECOM'03. 2003 - IEEE GLOBAL TELECOMMUNICATIONS CONFERENCE. CONFERENCE PROCEEDINGS. SAN FRANCISCO, CA, DEC. 1 - 5, 2003; [IEEE GLOBAL TELECOMMUNICATIONS CONFERENCE], NEW YORK, NY : IEEE, US, vol. 6, pages 3498-3503, XP010677202, DOI: 10.1109/GLOCOM.2003.1258885 ISBN: 978-0-7803-7974-9 cellular packet data services are described and discussed. This paper proposes three schemes that allow users to toggle between circuit-switched voice and packet-switched voice based on the desired tradeoff. Ongoing voice traffic is allowed to alternate between circuit-switched network and packet-switched network using a 3-way calling mechanism in the SIP-enabled GSM/GPRS cellular network. The toggle schemes depend on the cell load.

### SUMMARY

A telecommunications network comprises a base station node which provides plural sets of radio transmission resources for communicating with mobile stations in a cell. At least one set of radio transmission resources of the cell is a non-hopping set of radio transmission resources and other sets of radio transmission resources of the cell are hopping sets of radio transmission resources. A packet control unit schedules calls comprising voice over internet protocol packet flows on the non-hopping sets of radio transmission resources in accordance with capacity of the non-hopping set of radio transmission resources. When the non-hopping set of radio transmission resources lacks capacity for a further call with a mobile station, the packet control unit requests that the call be changed from a voice over internet protocol packet flow to a circuit switched connection. The packet control unit can be located either entirely or partially at any suitable network node, such as at a base station control (BSC) node, the base station node, and a GPRS Support node (GSN).

A method of operating a telecommunications network comprises configuring at least one set of radio transmission resources of a cell as a non-hopping set of radio transmission resources. Voice over internet protocol packet flows are scheduled on the non-hopping set of radio transmission resources in accordance with capacity of the non-hopping set of radio transmission resources. When the non-hopping set of radio transmission resources lacks capacity for a further call with a mobile station, the further call is changed from a voice over internet protocol packet flow to a circuit switched connection.

As another aspect, a method of operating a telecommunications network comprises configuring a transmitter with radio transmission resources including at least one radio transmission resource for a broadcast control channel (BCCH); scheduling calls comprising voice over internet protocol packet flows on the radio transmission resources of the transmitter in accordance with capacity of the transmitter; and, when the transmitter having the radio transmission resource for the broadcast control channel (BCCH) lacks capacity for a further call with a mobile station. requesting that the further call be changed from a voice over internet protocol packet flow to a circuit switched connection. The radio transmission resources of the transmitter can be, for example, non-hopping resources, in which case the method may further comprise utilizing at least one timeslot of the non-hopping radio transmission resources for the broadcast control channel (BCCH), and using other timeslots of the non-hopping radio transmission resources for the calls comprising voice over internet protocol packet flows. Requesting that the further call be changed from the voice over internet protocol packet flow to the circuit switched connection can comprise requesting that the mobile station to perform a packet-switch to circuit-switch handover and thereby reattach the call as a circuit switch call other radio transmission resources (e.g., hopping radio transmission resources of other transmitters serving the same cell).

In an illustrated, non-limiting example embodiment, the non-hopping set of radio transmission resources comprise radio transmission resources provided by a non-hopping transceiver and the radio transmission resources provided by the non-hopping transceiver comprise timeslots on a frequency upon which the non-hopping transceiver operates. Similarly, the hopping sets of radio transmission resources comprise radio transmission resources provided by respective hopping transceivers and the radio transmission resources provided by the hopping transceivers comprise timeslots on respective frequencies upon which the hopping transceivers operate.

In an example implementation, at least one radio transmission resource of the non-hopping set of radio transmission resources can be utilized for a BCCH, while other radio transmission resources of the non-hopping set of radio transmission resources can be utilized for the calls comprising voice over internet protocol packet flows. For example, at least one timeslot of the non-hopping set of radio transmission resources can be utilized for a BCCH, and other timeslots of the non-hopping set of radio transmission resources can be utilized for the calls comprising voice over internet protocol packet flows.

In an example embodiment, the step of requesting that the mobile station change the call from a voice over internet protocol packet flow to the circuit switched connection can comprise requesting the mobile station to perform a packet-switch to circuit-switch handover and thereby reattach the call as a circuit switch call on one of the hopping sets of radio transmission resources of the cell.

In an example implementation, the calls comprising voice over internet protocol packet flows are EDGE VoIP flows. Preferably, but not necessarily, the hopping sets of radio transmission resources have higher reuse among other cells of the network than the non-hopping set of radio transmission resources.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.

Fig. 1 is a simplified function block diagram of a portion of a generic network including portions of a mobile station (MS), portions of a base transceiver station (BTS), and portions of a packet control unit (PCU).

Fig. 1A is a simplifed function block diagram showing a variation of the network of Fig. 1 wherein the packet control unit (PCU) 25 is located at a base station control (BSC) node.

Fig. 1B is a simplifed function block diagram showing a variation of the network of Fig. 1 wherein the packet control unit (PCU) 25 is located at a base transceiver station (BTS).

Fig. 1C is a simplifed function block diagram showing a variation of the network of Fig. 1 wherein the packet control unit (PCU) 25 is located at a GPRS Support node (GSN).

Fig. 2 is a flowchart showing basic, example, representative, non-limiting steps or actions performed by resource assignment controller of a base station controller (BSC).

Fig. 3 is diagrammatic view of example telecommunications system in which the present technology may be advantageously employed.

Fig. 4 is a protocol diagram of an EDGE (Enhanced Data Rates for Global Evolution) system.

Fig. 5 is a graph depicting throughput (bitrate) as a function of radio quality (C/I).

### DETAILED DESCRIPTION OF THE DRAWINGS

In the following description, for purposes of explanation and not limitation. specific details are set forth such as particular architectures, interfaces, techniques, etc. in order to provide a thorough understanding of the present invention. However, it will be apparent to those skilled in the art that the present invention may be practiced in other embodiments that depart from these specific details. That is, those skilled in the art will be able to devise various arrangements which, although not explicitly described or shown herein, embody the principles of the invention and are included within its spirit and scope. In some instances, detailed descriptions of well-known devices, circuits, and methods are omitted so as not to obscure the description of the present invention with unnecessary detail. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that block diagrams herein can represent conceptual views of illustrative circuitry embodying the principles of the technology. Similarly, it will be appreciated that any flow charts, state transition diagrams, pseudocode, and the like represent various processes which may be substantially represented in computer readable medium and so executed by a computer or processor, whether or not such computer or processor is explicity shown.

The functions of the various elements including functional blocks labeled as "processors" or "controllers" may be provided through the use of dedicated hardware as well as hardware capable of executing software in association with appropriate software. When provided by a processor, the functions may be provided by a single dedicated processor, by a single shared processor, or by a plurality of individual processors, some of which may be shared or distributed. Moreover, explicit use of the term "processor" or "controller" should not be construed to refer exclusively to hardware capable of executing software, and may include, without limitation, digital signal processor (DSP) hardware. read only memory (ROM) for storing software, random access memory (RAM), and non-volatile storage.

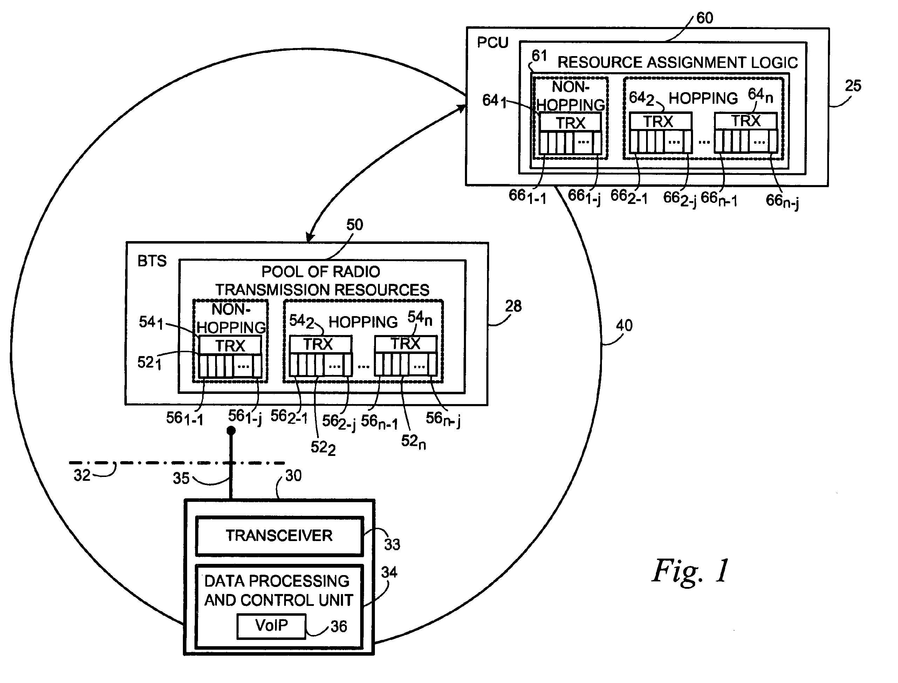

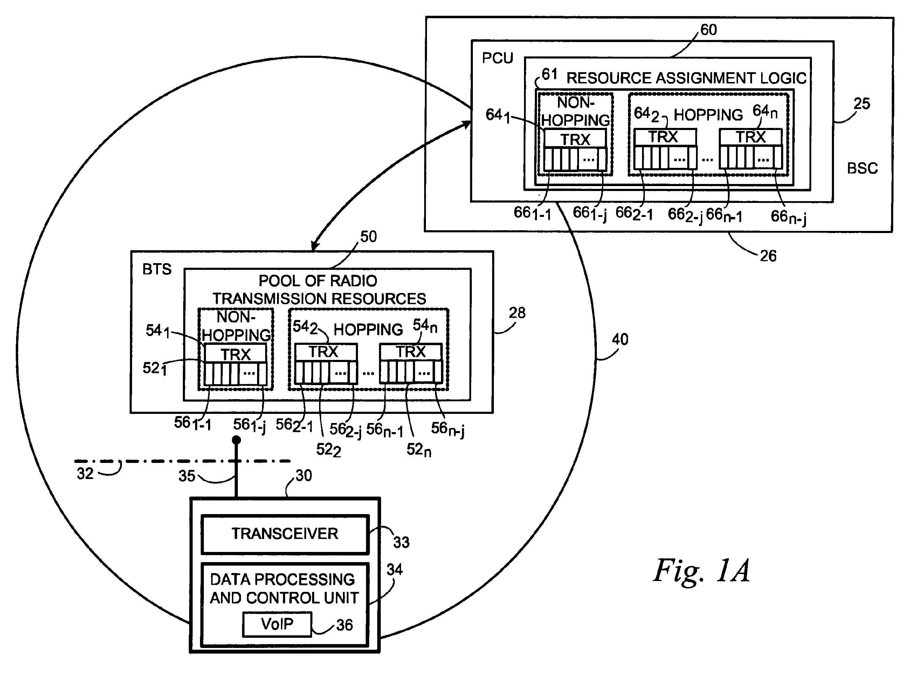

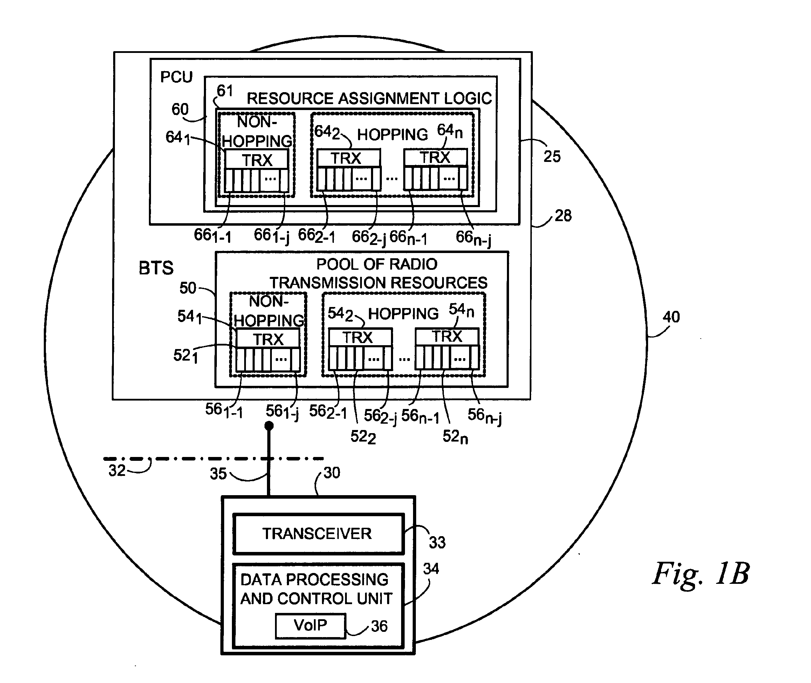

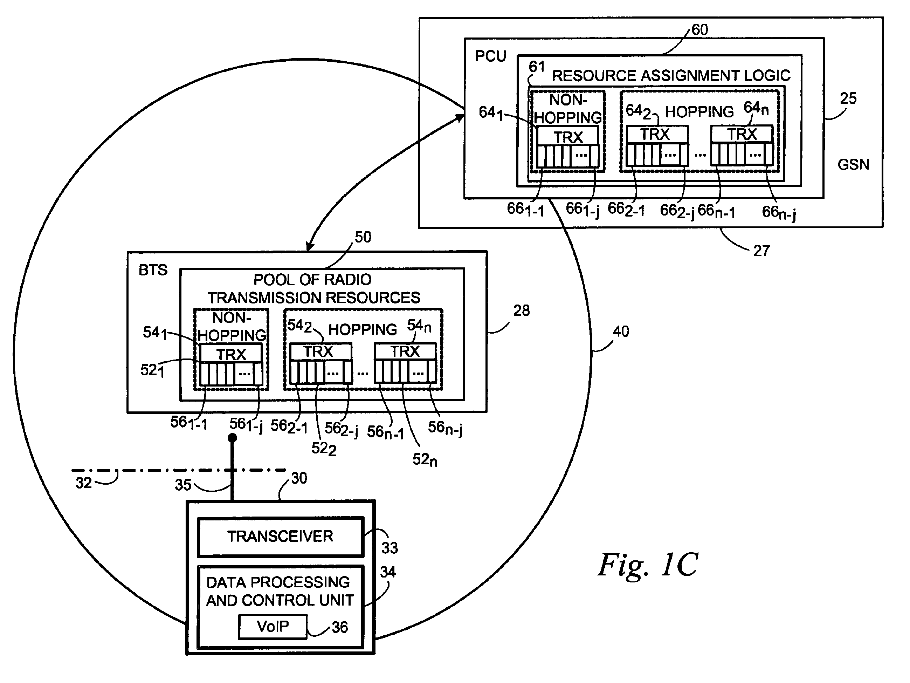

Fig. 1 shows a portion of a generic network including portions of a packet control unit (PCU) 25 and portions of a base transceiver station (BTS) 28, as well as a mobile station (MS) 30 in radio frequency communication over an air interface 32 with base transceiver station (BTS) 28. The mobile station (MS) 30 includes a transceiver 33 and a data processing and control unit 34. Included in data processing and control unit 34 are functionalities for providing a voice over Internet Protocol (VoIP) capability, e.g., VoIP application 36. The person skilled in the art will recognize that mobile station (MS) 30 and data processing and control unit 34 in particular typically includes numerous other functionalities and applications, as well as unillustrated input/output devices such as a screen, keypad, and the like.

The base transceiver station (BTS) 28 serves one or more cells, such as cell 40. In serving cell 40, base transceiver station (BTS) 28 provides a pool 50 of radio transmission resources. As conceptualized in an example embodiment of Fig. 1, pool 50 comprises plural sets 52₁- 52ₙ of radio transmission resources for communicating with mobile stations in cell 40. At least one set of radio transmission resources of the cell is a non-hopping set of radio transmission resources. For example, in the implementation of Fig. 1 set 52₁ is a non-hopping set of radio transmission resources. Other sets of radio transmission resources of the cell, such as sets 52₂ - 52ₙ are hopping sets of radio transmission resources.

In an illustrated, non-limiting example implementation of the Fig. 1 embodiment, the non-hopping set 52₁ of radio transmission resources comprise radio transmission resources provided by a non-hopping transceiver 54₁. The radio transmission resources provided by the non-hopping transceiver 54₁ comprise timeslots 56₁₋₁ through 56₁₋ⱼ on a frequency upon which the non-hopping transceiver 54₁ operates. Similarly, the hopping sets 52₂ - 52ₙ of radio transmission resources comprise radio transmission resources provided by respective hopping transceivers 54₂ - 52ₙ and the radio transmission resources provided by the hopping transceivers comprise timeslots on respective frequencies upon which the hopping transceivers operate. For example, the radio transmission resources provided by hopping transceiver 54₂ comprise timeslots 56₂₋₁ through 56₂₋ⱼ; the radio transmission resources provided by hopping transceiver 54₃ comprise timeslots 56₃₋₁ through 56₃₋ⱼ; and so forth.

Optionally in the foregoing example implementation, at least one radio transmission resource of the non-hopping set 52₁ of radio transmission resources can be utilized for a broadcast control channel (BCCH) (and/or for other standardized or common broadcast channels), while other radio transmission resources of the non-hopping set non-hopping set 52₁ of radio transmission resources can be utilized for calls comprising voice over internet protocol packet flows. For example, at least one timeslot of the non-hopping set 52₁ of radio transmission resources can be utilized for a BCCH (such as timeslots 56₁₋₁. for example), and other timeslots of the non-hopping set 52₁ of radio transmission resources (such as timeslots 56₁₋₂ through 56₁₋₃, for example) can be utilized for the calls comprising voice over internet protocol packet flows.

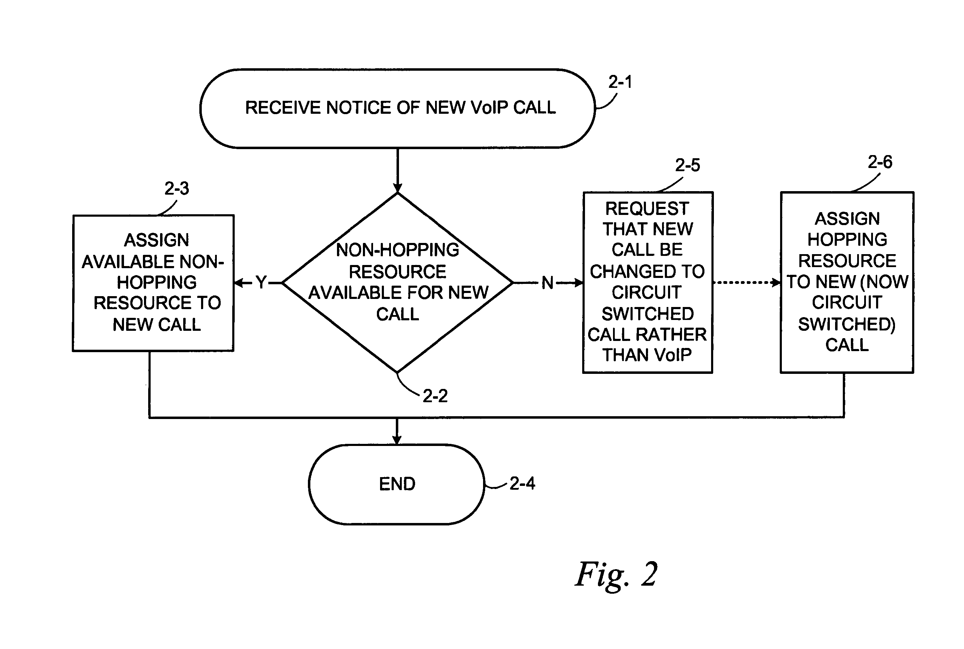

The packet control unit (PCU) 25 comprises resource assignment logic, which can be implemented (for example) by a resource assignment controller 60. In an example embodiment, resource assignment logic controller 60 schedules calls which take the form of voice over internet protocol packet flows in the method and/or manner of Fig. 2.

Fig. 2 shows basic, example, representative, non-limiting steps or actions performed by resource assignment controller 60 of packet control unit (25). Step 2-1 shows resource assignment controller 60 being notified of a new call which does or intends to use voice over internet protocol packet flow(s). The notification may apprise resource assignment controller 60 that the call is being requested or actually setup. Upon receipt of such notification, as step 2-2 the resource assignment controller 60 checks whether capacity currently exist on one of the non-hopping sets of radio transmission resources for carrying the new call. In other words, resource assignment controller 60 determines whether any non-hopping resource is currently available for allocation to the new call. In the example implementation of Fig. 1, for example, as step 2-2 the resource assignment controller 60 checks whether any of the timeslots 56 of non-hopping transceiver 54₁ are available to allocate to the new call.

For its assignment and allocation of resources, resource assignment controller 60 may inclucle a resource memory 61 or other mechanism for keeping track of allocation or assignment of resources of the sets 52 of radio transmission resources provided by base transceiver station (BTS) 28. The resource memory 61 may resemble a map or image of the sets 52 of radio transmission resources. For example, as shown in Fig. 1, the memory or map 51 may contain a transceiver information element 64 corresponding to each transceiver 54 and a timeslot information element 66 corresponding to each timeslot 56. As further example of such correspondence, timeslot information element 66₁₋₂ corresponds to timeslot 56₁₋₂ of set 52₁ of the radio transmission resources provided by transceiver 54₁; timeslot information element 66₁₋₃ corresponds to timeslot 56₁₋₃ of set 52₁ of the radio transmission resources provided by transceiver 54₁; timeslot information element 66₂₋₁ corresponds to timeslot 56₂₋₁ of set 52₂ of the radio transmission resources provided by transceiver 54₂; and so forth.

If the check of step 2-2 indicates that the non-hopping resource has capacity, as step 2-3 the resource assignment controller 60 assigns an available non-hopping resource to the new call. Included in step 2-3 is the resource assignment controller 60 updating (e.g., in its resource memory 61) the timeslot information element corresponding to the non-hopping resource assigned to the new call. The resource assignment controller 60 can then end its processing aspects involved in setup of the new call, as indicated by step 2-4. Of course, upon completion or breakdown of the call, the resource memory 61 will need again to be updated to reflect the timeslot again becoming available.

When the non-hopping set of radio transmission resources lacks capacity for a further call with a mobile station, as step 2-5 the resource assignment controller 60 prompts packet control unit (25) to request that the call be changed from a voice over internet protocol packet flow to a circuit switched connection. Such request can be implemented, for example, by requesting that the mobile station (MS) 30 change the call from a voice over internet protocol packet flow to a circuit switched connection.

Assuming that, in response to the request of step 2-5, the new call is switched to a circuit switch call rather than a VoIP call, eventually as step 2-6 the resource assignment controller 60 assigns a hopping radio transmission resource to the new (now circuit switched call). Assignment or reallocation of a call to a circuit switch call is understood by the person skilled in the art and is described, e.g., by 3GPP TR 23.806 V1.7.0 (2005-11), Technical Specification Group Service and System Aspects; Voice Call Continuity between CS and IMS Study (Release 7). The resource assignment controller 60 can then end its processing aspects involved in setup of the new call, as indicated by step 2-4. As mentioned previously, upon completion or breakdown of the call, the resource memory 61 will need again to be updated to reflect the hopping resource becoming available.

Thus, encompassed hereby is a method of operating a telecommunications network which comprises configuring at least one set of radio transmission resources of a cell as a non-hopping set of radio transmission resources. Voice over internet protocol packet flows are scheduled on the non-hopping set of radio transmission resources in accordance with capacity of the non-hopping set of radio transmission resources. When the non-hopping set of radio transmission resources lacks capacity for a further call with a mobile station, the call is changed from a voice over internet protocol packet flow to a circuit switched connection.

In an example embodiment, the step of requesting that the mobile station change the call from a voice over internet protocol packet flow to the circuit switched connection can comprise requesting the mobile station to perform a packet-switch to circuit-switch handover and thereby reattach the call as a circuit switch call on one of the hopping sets of radio transmission resources of the cell.

Preferably, but not necessarily, the hopping sets of radio transmission resources have higher reuse among other cells of the network than the non-hopping set of radio transmission resources. Frequency reuse is known to the person skilled in the art and understood with reference, for example, to any of the following (all of which are incorporated by reference herein in their entireties): US Patent 6,493.541: US Patent Application No. 09/825.353; US Patent 6.845,123: US Patent 6.882,847: US Patent 6.757,542: and US Patent 6.590.928.

In the non-limiting illustration of Fig. 1. a radio transmission resource takes the form of a timeslot on a frequency/frequencies provided by a transceiver, with the set of timeslots provided by the transceiver being referred to as a set of resources. It should be appreciated, however, that the above technique (e.g.. of changing a call to a circuit switched call when no non-hopping radio transmission resources arc available) can be implemented when the radio transmission resources take forms other than timeslots. In this regard, a "radio transmission resource" as utilized herein can take other forms such as (for example) a channel, radio bearer, or subdivision or aspect of a carrier allocated to a call, even in technologies which do not utilize timeslots.

The packet control unit (PCU) 25 can be located either entirely or partially at any suitable network node, such as at a base station control (BSC) node 26 as shown in Fig. 1A, a base transceiver station (BTS) or base station node as shown in Fig. 1B, or a GPRS Support node (GSN) 27 as shown in Fig. 1C. By located partially at a node means that the functionality of packet control unit (PCU) 25 can be distributed over two or more nodes.

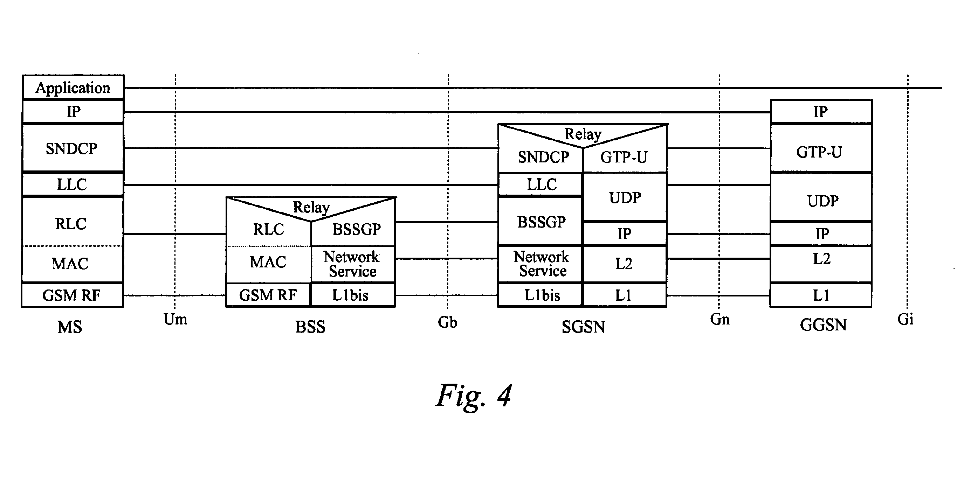

In an example implementation, the calls comprising voice over internet protocol (VoIP) packet flows are EDGE (Enhanced Data Rates for Global Evolution) VoIP flows. As utilized herein, "EDGE" includes EDGE Evolution, also known, e.g., as EDGE Phase 2. Fig. 4 is a protocol diagram of an EDGE system. In accordance with the method described herein, VoIP EDGE flows are first scheduled on the non-hopping EDGE transceiver. Once the non-hopping EDGE transceiver is full, instead of scheduling the next VoIP user on the hopping EDGE transceiver (where the bandwidth efficiency could be worse than for circuit switched connections), the packet control unit (25) will signal to the mobile station (MS) to perform a packet switched-to-circuit switched handoff. This assumes that the packet control unit (25) can detect or otherwise be notified of a VoIP flow.

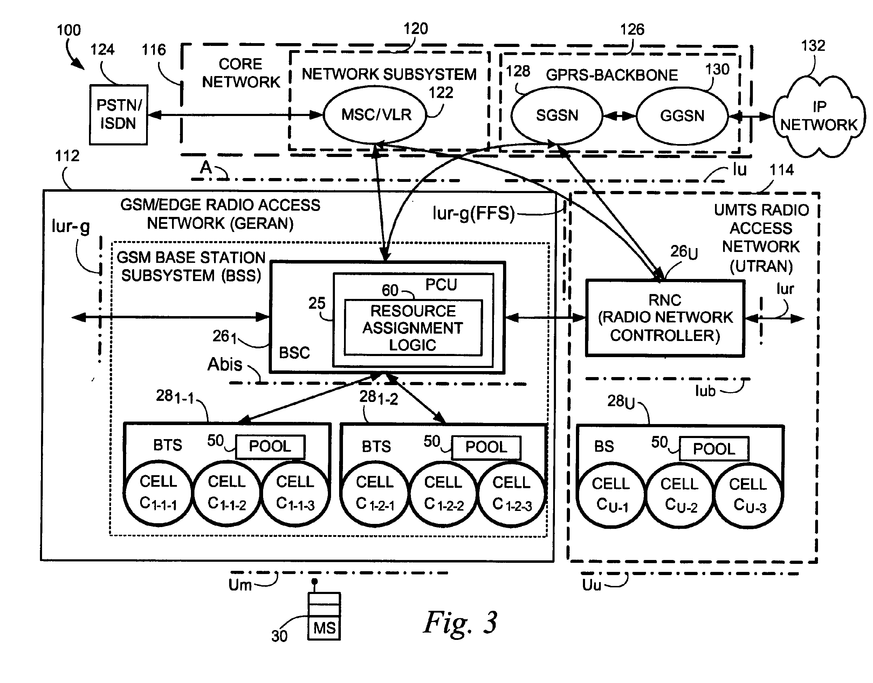

Fig. 3 shows a telecommunications system 100 which provides an example, illustrative context in which the foregoing structure may be found and the foregoing methods may be practiced. The example telecommunications system 100 of Fig. 3 operates in conjunction with both a first radio access network 112 having a first type radio access technology and a second radio access network 114 having a second type radio access technology. In the non-limiting example shown in Fig. 3, the first radio access network 112 uses GSM/EDGE radio access technology (GERAN), while the second radio access network 114 uses UTRAN radio access technology.

Both first radio access network 112 and second radio access network 114 are connected to an external core network(s) 116. The core network(s) 116 include a network subsystem 120 for circuit switched connections, featuring a Mobile Switching Center (MSC) 122 which typically operates in conjunction with registers such as a visitor location register (VLR). The network subsystem 120 is typically connected to (for example) the Public Switched Telephone Network (PSTN) 124 and/or the Integrated Services Digital Network (ISDN).

The core network(s) 116 also include a GPRS/backbone 126 which comprises a serving GPRS service node (SGSN) 128 and a Gateway GPRS support node (GGSN) node 130. The GPRS/backbone 126 is connected to connectionless-oriented external network such as IP Network 132 (e.g.. the Internet). Thus, the packet switched connections involve communicating with Serving GPRS Support Node (SGSN) 128 which in turn is connected through a backbone network and Gateway GPRS support node (GGSN) 130 to packet-switched networks 130 (e.g.. the Internet. X.25 external networks).

The core network(s) 116 can connect to the first radio access network 12 (e.g.. the GERAN) over either an interface known as the A interface, an interface known as the Gb interface, or an open Iu interface, or any combination of these three interfaces. In Fig. 3, it is assumed that the first radio access network is only connected over the Iu interface. The first radio access network 112 includes one or more base station controllers (BSCs) 26, with each base station controller (BSC) 26 controlling one or more base transceiver stations (BTSs) 28. In the example shown in Fig. 3, base station controller (BSC) 26₁ is connected across the Abis interface to two base transceiver stations, particularly base transceiver station (BTS) 28₁₋₁ and base transceiver station (BTS) 28₁₋₂. Each base transceiver station (BTS) 28₁ is depicted in Fig. 3 as serving three cells C. Each cell C is represented by a circle proximate the respective base station. Thus, it will be appreciated by those skilled in the art that a base station may serve for communicating across the air interface for more than one cell, and that differing base stations may serve differing numbers of cells.

Fig. 3 also shows that the GERAN typically comprises plural base station controllers (BSCs) 26. although only one of such base station controllers, particularly base station controller (BSC) 26₁, is illustrated. For simplicity, details of the base station subsystem (BSS) involving base station controller (BSC) 26₂ are omitted. The base station controllers 26 control radio resources and radio connectivity within a set of cells. Each base station (BTS) 28 handles the radio transmission and reception within one or more cells.

The core network 116 also connects to the second radio access network 114 (e.g.. the UTRAN radio access network) over an interface know as the Iu interface. The second radio access network 114 includes one or more radio network controllers (RNCs) 26_{U}. For sake of simplicity, the UTRAN 114 of Fig. 1 is shown with only one RNC node. The RNC node 26_{U} is connected to a plurality of base stations 28_{U} (e.g., node Bs). In second radio access network (UTRAN network) 114, the radio network controller (RNC) 26_{U} controls radio resources and radio connectivity within a set of cells, while the base stations handle the radio transmission and reception within one or more cells. The Abis interface, a radio interface Um, the Iu interface, and the other interfaces are shown by dash-dotted lines in Fig. 3.

In the particular non-limiting example described in Fig. 3, the packet control unit (PCU) 25 is situated at the base station controller (BSC) 26 essentially in the manner depicted in Fig. 1A. It will be recalled that packet control unit (PCU) 25 could be located elsewhere, as illustrated by Fig. 1B and Fig. 1C, for example. In accordance with the technique described herein, the base station controller (BSC) 26 can detect or be notified about a VoIP flow. When detected, the packet control unit (PCU) 25 via its resource assignment controller 60 schedules the EDGE VoIP flow on the same transceiver as the BCCH (e.g.. transceiver 54₁ in the Fig. 1 implementation). When the non-hopping transceiver is completely filled with VoIP flows, the next VoIP flow is not scheduled on the next (e.g.. another) transceiver 54. Rather, the call is switched from VoIP to circuit switched. For example, a message is sent from the base station controller (BSC) 26 to the mobile station (MS) 30 in the form of a "PS-to-CS HO Command". The mobile station (MS) 30 will perform a PS-to-CS handover and reattach the call as a circuit switch call (on a hopping resource. e.g.. a hopping transceiver).

In view of the techniques herein provided, higher hardware efficiency is achieved, i.e. more phone calls can be served, with the same number of basestations/transceivers.

As mentioned previously, at the start or introduction of VoIP, each user upgrading from an old circuit switched phone to a VoIP phone will bring a benefit for the operator in terms of increased hardware efficiency. With the techniques herein provided, even though the non-hopping transmission resources may become filled, there will be no penalty in terms of decreased hardware efficiency, even if VoIP penetration continues to increase beyond that point.

If the user can be more efficiently served in the packet switched domain, that user will be served in the PS domain. If the user can he more efficiently served in the circuit switched domain, that user will be served in the circuit switched domain.

Thus, the packet control unit (PCU) 25 with its resource assignment controller 60 as herein described connects the hopping vs. non-hopping resource selection with a decision to make a PS-to-CS handoff. specifically for EDGE VoIP flows (e.g., as detected by the base station controller (BSC) 26).

Although various embodiments have been shown and described in detail, the claims are not limited to any particular embodiment or example. None of the above description should be read as implying that any particular element, step, range, or function is essential such that it must be included in the claims scope. The scope of patented subject matter is defined only by the claims. The extent of legal protection is defined by the words recited in the allowed claims and their equivalents. It is to be understood that the invention is not to be limited to the disclosed embodiment. but on the contrary, is intended to cover various modifications and equivalent arrangements.

## Claims

1. A method of operating a telecommunications network comprising:
configuring at least one set of radio transmission resources (52ⱼ)of a cell as a non-hopping set of radio transmission resources;
configuring other sets of radio transmission resources (52₁₋j) of the cell as hopping sets of radio transmission resources;
scheduling calls comprising voice over internet protocol packet flows on the non-hopping set of radio transmission resources in accordance with capacity of the non-hopping set of radio transmission resources; **characterized by**:
when the non-hopping set of radio transmission resources lacks capacity for further call with a mobile station, requesting that the further call be changed from a voice over internet protocol packet flow to a circuit switched connection.

2. The method of claim 1, wherein the non-hopping set of radio transmission resources comprise radio transmission resources provided by a non-hopping transceiver and wherein the radio transmission resources provided by the non-hopping transceiver comprise timeslots on a frequency upon which the non-hopping transceiver operates, and wherein the hopping sets of radio transmission resources comprise radio transmission resources provided by respective hopping transceivers and wherein the radio transmission resources provided by the hopping transceivers comprise timeslots on respective frequencies upon which the hopping transceivers operate.

3. The method of claim 1, wherein the hopping sets of radio transmission resources have higher reuse among other cells of the network than the non-hopping of radio transmission resources.

4. The method of claim 1, wherein the calls comprising voice over internet protocol packet flows are EDGE VoIP flows.

5. The method of claim 1, wherein the radio transmission resources of the transmitter are non-hopping resources, and further comprising utilizing at least one timeslot of the non-hopping radio transmission resources for the broadcast control channel (BCCH), and using other timeslots of the non-hopping radio transmission resources for the calls comprising voice over internet protocol packet flows.

6. The method of claim 5, wherein requesting that the further call be changed the voice over internet protocol packet flow to the circuit switched connection comprises requesting the mobile station to perform a packet-switch to circuit-switch handover and thereby reattach the call as a circuit switch call other radio transmission resources.

7. A telecommunications network comprising:
a base station node (28) arranged to provide plural sets of radio transmission resources (52) for communicating with mobile stations in a cell, at least one set of radio transmission resources of the cell being a non-hopping set of radio transmission resources and other sets of radio transmission resources of the cell being hopping sets radio transmission resources, characterized as further comprising:
a packet control unit is arranged to schedule calls comprising voice over internet protocol packet flows on the non-hopping sets of radio transmission resources in accordance with capacity of the non-hopping set of radio transmission resources and which further is arranged to, when the non-hopping set of radio transmission resources lacks capacity for a further call with a mobile station, request that the further call he changed from a voice over internet protocol packet flow to a circuit switched connection.

8. The telecommunications network of claim 7, wherein the non-hopping set of radio transmission resources comprise radio transmission resources provided by a non-hopping transceiver and wherein the radio transmission resources provided by the non-hopping transceiver comprise timeslots on a frequency upon which the non-hopping transceiver operates, and wherein the hopping sets of radio transmission resources comprise radio transmission resources provided by respective hopping transceivers and wherein the radio transmission resources provided by the hopping transceivers comprise timeslots on respective frequencies upon which the hopping transceivers operate.

9. A packet control unit for a telecommunications network which has plural sets of radio transmission resources for communicating with mobile stations in a cell, at least one set of radio transmission resources of the cell being a non-hopping set of radio transmission resources and other sets of radio transmission resources of the cell being hopping sets of radio transmission resources, and wherein the packet control unit is arranged to schedule calls comprising voice over internet protocol packet flows on the non-hopping sets of radio transmission resources in accordance with capacity of the non-hopping set of radio transmission resources and which is **characterized by** being arranged to , when the non-hopping set of radio transmission resources lacks capacity for a further call with a mobile station, request that the further call be changed from a voice over internet protocol packet flow to a circuit switched connection.

10. The packet control unit of claim 9, wherein the non-hopping set of radio transmission resources comprise radio transmission resources provided by a non-hopping transceiver and wherein the radio transmission resources provided by the non-hopping transceiver comprise timeslots on a frequency upon which the non-hopping transceiver operates, and wherein the hopping sets of radio transmission resources comprise radio transmission resources provided by respective hopping transceivers and wherein the radio transmission resources provided by the hopping transceivers comprise timeslots on respective frequencies upon which the hopping transceivers operate.

11. The telecommunications network of claim 7 or the packet control unit of claim 9, wherein, to request that the further call be changed from a voice over internet protocol packet flow to a circuit switched connection, the packet control unit is configured to request the mobile station to perform a packet-switch to circuit-switch handover and thereby reattach the further call as a circuit switch call on one of the hopping sets of radio transmission resources of the cell.

12. The telecommunications network of claim 7 or the packet control unit of claim 9, wherein the hopping sets of radio transmission resources have higher reuse among other cells of the network than the non-hopping set of radio transmission resources.

13. The telecommunications network of claim 7 or the packet control unit of claim 9, wherein the calls comprising voice over internet protocol packet flows are EDGE VoIP flows.

14. The telecommunications network of claim 7 or the packet control unit of claim 9, wherein the packet control unit is at least partially situated at a base station controller (26) node.

15. The telecommunications network of claim 7 or the packet control unit of claim 9, wherein the packet control unit is at least partially situated at a base station node (28).

16. The telecommunications network of claim 7 or the packet control unit of claim 9, wherein the packet control unit is at least partially situated at a GPRS Support Node.

## Patentansprüche

1. Verfahren zum Betreiben eines Telekommunikationsnetzwerks, umfassend:
Konfigurieren mindestens einer Menge von Funkübertragungsressourcen (52ⱼ) einer Zelle als eine nicht springende Menge von Funkübertragungsressourcen;
Konfigurieren anderer Mengen von Funkübertragungsressourcen (52₁₋ⱼ) der Zelle als springende Mengen von Funkübertragungsressourcen;
Einplanen von Gesprächsverbindungen, die Sprache-über-Intemetprotokoll-Paketflüsse umfassen, auf der nicht springenden Menge von Funkübertragungsressourcen, und zwar gemäß der Kapazität der nicht springenden Menge von Funkübertragungsressourcen; **gekennzeichnet durch**:
wenn die nicht springende Menge von Funkübertragungsressourcen nicht genug Kapazität für eine weitere Gesprächsverbindung mit einer Mobilstation hat: Anfordern, dass die weitere Gesprächsverbindung von einem Sprache-über-Internetprotokoll-Paketfluss zu einer leitungsvermittelten Verbindung umgelegt wird.

2. Verfahren nach Anspruch 1, worin die nicht springende Menge von Funkübertragungsressourcen durch einen nicht springenden Sendeempfänger bereitgestellte Funkübertragungsressourcen umfasst und worin die durch den nicht springenden Sendeempfänger bereitgestellten Funkübertragungsressourcen Zeitschlitze auf einer Frequenz umfassen, auf welcher der nicht springende Sendeempfänger arbeitet, und worin die springenden Mengen von Funkübertragungsressourcen durch jeweilige springende Sendeempfänger bereitgestellte Funkübertragungsressourcen umfassen und worin die durch die springenden Sendeempfänger bereitgestellten Funkübertragungsressourcen Zeitschlitze auf jeweiligen Frequenzen umfassen, auf denen die springenden Sendeempfänger arbeiten.

3. Verfahren nach Anspruch 1, worin die springenden Mengen von Funkübertragungsressourcen eine höhere Wiederverwendung unter anderen Zellen des Netzwerks als die nicht springende Menge von Funkübertragungsressourcen haben.

4. Verfahren nach Anspruch 1, worin die Gesprächsverbindungen, die Sprache-über-Internetprotokoll-Paketflüsse umfassen, EDGE-VoIP-Flüsse sind.

5. Verfahren nach Anspruch 1, worin die Funkübertragungsressourcen des Senders nicht springende Funkübertragungsressourcen sind, und ferner umfassend: Nutzen mindestens eines Zeitschlitzes der nicht springenden Funkübertragungsressourcen für den Rundsende-Steuerungskanal (BCCH) und Verwenden anderer Zeitschlitze der nicht springenden Funkübertragungsressourcen für die Gesprächsverbindungen, die Spracheüber-Internetprotokoll-Paketflüsse umfassen.

6. Verfahren nach Anspruch 5, worin das Anfordern, dass die weitere Gesprächsverbindung vom Sprache-über-Internetprotokoll-Paketfluss zu der leitungsvermittelten Verbindung umgelegt wird, umfasst: Anfordern, dass die Mobilstation eine Verbindungsübergabe von Paketvermittlung zu Leitungsvermittlung durchführt und dadurch die Gesprächsverbindung als eine leitungsvermittelte Gesprächsverbindung auf anderen Funkübertragungsressourcen wiederaufnimmt.

7. Telekommunikationsnetzwerk, umfassend:
einen Basisstationsknoten (28), der dafür eingerichtet ist, mehrere Mengen von Funkübertragungsressourcen (52) zum Kommunizieren mit Mobilstationen in einer Zelle bereitzustellen, wobei mindestens eine Menge von Funkübertragungsressourcen der Zelle eine nicht springende Menge von Funkübertragungsressourcen ist und andere Mengen von Funkübertragungsressourcen der Zelle springende Mengen von Funkübertragungsressourcen sind, gekennzeichnet als ferner umfassend:
eine Paketsteuerungseinheit, die dafür eingerichtet ist, Gesprächsverbindungen, die Sprache-über-Internetprotokoll-Paketflüsse umfassen, auf der nicht springenden Menge von Funkübertragungsressourcen einzuplanen, und zwar gemäß der Kapazität der nicht springenden Menge von Funkübertragungsressourcen, und die ferner dafür eingerichtet ist, wenn die nicht springende Menge von Funkübertragungsressourcen nicht genug Kapazität für eine weitere Gesprächsverbindung mit einer Mobilstation hat, anzufordern, dass die weitere Gesprächsverbindung von einem Sprache-über-Internetprotokoll-Paketfluss zu einer leitungsvermittelten Verbindung umgelegt wird.

8. Telekommunikationsnetzwerk nach Anspruch 7, worin die nicht springende Menge von Funkübertragungsressourcen durch einen nicht springenden Sendeempfänger bereitgestellte Funkübertragungsressourcen umfasst und worin die durch den nicht springenden Sendeempfänger bereitgestellten Funkübertragungsressourcen Zeitschlitze auf einer Frequenz umfassen, auf welcher der nicht springende Sendeempfänger arbeitet, und worin die springenden Mengen von Funkübertragungsressourcen durch jeweilige springende Sendeempfänger bereitgestellte Funkübertragungsressourcen umfassen und worin die durch die springenden Sendeempfänger bereitgestellten Funkübertragungsressourcen Zeitschlitze auf jeweiligen Frequenzen umfassen, auf denen die springenden Sendeempfänger arbeiten.

9. Paketsteuerungseinheit für ein Telekommunikationsnetzwerk, das mehrere Mengen von Funkübertragungsressourcen zum Kommunizieren mit Mobilstationen in einer Zelle hat, wobei mindestens eine Menge von Funkübertragungsressourcen der Zelle eine nicht springende Menge von Funkübertragungsressourcen ist und andere Mengen von Funkübertragungsressourcen der Zelle springende Mengen von Funkübertragungsressourcen sind, und worin die Paketsteuerungseinheit dafür eingerichtet ist, Gesprächsverbindungen, die Sprache-über-Internetprotokoll-Paketflüsse umfassen, auf der nicht springenden Menge von Funkübertragungsressourcen einzuplanen, und zwar gemäß der Kapazität der nicht springenden Menge von Funkübertragungsressourcen, und die **dadurch gekennzeichnet ist, dass** sie dafür eingerichtet ist, wenn die nicht springende Menge von Funkübertragungsressourcen nicht genug Kapazität für eine weitere Gesprächsverbindung mit einer Mobilstation hat, anzufordern, dass die weitere Gesprächsverbindung von einem Sprache-über-Internetprotokoll-Paketfluss zu einer leitungsvermittelten Verbindung umgelegt wird.

10. Paketsteuerungseinheit nach Anspruch 9, worin die nicht springende Menge von Funkübertragungsressourcen durch einen nicht springenden Sendeempfänger bereitgestellte Funkübertragungsressourcen umfasst und worin die durch den nicht springenden Sendeempfänger bereitgestellten Funkübertragungsressourcen Zeitschlitze auf einer Frequenz umfassen, auf welcher der nicht springende Sendeempfänger arbeitet, und worin die springenden Mengen von Funkübertragungsressourcen durch jeweilige springende Sendeempfänger bereitgestellte Funkübertragungsressourcen umfassen und worin die durch die springenden Sendeempfänger bereitgestellten Funkübertragungsressourcen Zeitschlitze auf jeweiligen Frequenzen umfassen, auf denen die springenden Sendeempfänger arbeiten.

11. Telekommunikationsnetzwerk nach Anspruch 7 oder Paketsteuerungseinheit nach Anspruch 9, worin, um anzufordern, dass die weitere Gesprächsverbindung von einem Sprache-über-Internetprotokoll-Paketfluss zu einer leitungsvermittelten Verbindung umgelegt wird, die Paketsteuerungseinheit dafür konfiguriert ist, anzufordern, dass die Mobilstation eine Verbindungsübergabe von Paketvermittlung zu Leitungsvermittlung durchführt und dadurch die weitere Gesprächsverbindung als eine leitungsvermittelte Gesprächsverbindung auf einer der springenden Mengen von Funkübertragungsressourcen der Zelle wiederaufnimmt.

12. Telekommunikationsnetzwerk nach Anspruch 7 oder Paketsteuerungseinheit nach Anspruch 9, worin die springenden Mengen von Funkübertragungsressourcen eine höhere Wiederverwendung unter anderen Zellen des Netzwerks als die nicht springende Menge von Funkübertragungsressourcen haben.

13. Telekommunikationsnetzwerk nach Anspruch 7 oder Paketsteuerungseinheit nach Anspruch 9, worin die Gesprächsverbindungen, die Sprache-über-Intemetprotokoll-Paketflüsse umfassen, EDGE-VoIP-Flüsse sind.

14. Telekommunikationsnetzwerk nach Anspruch 7 oder Paketsteuerungseinheit nach Anspruch 9, worin die Paketsteuerungseinheit zumindest teilweise in einem Basisstationscontrollerknoten (26) gelegen ist.

15. Telekommunikationsnetzwerk nach Anspruch 7 oder Paketsteuerungseinheit nach Anspruch 9, worin die Paketsteuerungseinheit zumindest teilweise in einem Basisstationsknoten (28) gelegen ist.

16. Telekommunikationsnetzwerk nach Anspruch 7 oder Paketsteuerungseinheit nach Anspruch 9, worin die Paketsteuerungseinheit zumindest teilweise in einem GPRS-Unterstützungsknoten gelegen ist.

## Revendications

1. Procédé d'exploitation d'un réseau de télécommunication consistant à :
configurer au moins un ensemble de ressources de transmission radio (52ⱼ) d'une cellule sous la forme d'un ensemble de ressources de transmission radio sans saut ;
configurer d'autres ensembles de ressources de transmission radio (52₁₋ⱼ) de la cellule sous la forme d'ensembles de ressources de transmission radio avec sauts ;
ordonnancer des appels comprenant des flux de paquets Voix sur protocole Internet sur l'ensemble de ressources de transmission radio sans saut selon les capacités de l'ensemble de ressources de transmission radio sans saut, **caractérisé par** les étapes ci-dessous dans lesquelles :
lorsque l'ensemble de ressources de transmission radio sans saut ne dispose pas des capacités nécessaires à un appel supplémentaire avec une station mobile, demander que l'appel supplémentaire soit modifié pour passer d'un flux de paquets Voix sur protocole Internet à une connexion à commutation de circuits.

2. Procédé selon la revendication 1, dans lequel l'ensemble de ressources de transmission radio sans saut comporte des ressources de transmission radio fournies par un émetteur-récepteur sans saut, et dans lequel les ressources de transmission radio fournies par l'émetteur-récepteur sans saut comprennent des tranches de temps sur une fréquence à laquelle l'émetteur-récepteur sans saut opère, et dans lequel les ensembles de ressources de transmission radio avec sauts comprennent des ressources de transmission radio fournies par les émetteurs-récepteurs avec sauts respectifs, et dans lequel les ressources de transmission radio fournies par les émetteurs-récepteurs avec sauts comprennent des tranches de temps sur les fréquences respectives auxquelles opèrent les émetteurs-récepteurs avec sauts.

3. Procédé selon la revendication 1, dans lequel les ensembles de ressources de transmission radio avec sauts présentent des taux de réutilisation supérieurs, parmi d'autres cellules du réseau, relativement à ceux des ensembles de ressources de transmission radio sans saut.

4. Procédé selon la revendication 1, dans lequel les appels comprenant des flux de paquets Voix sur protocole Internet sont des flux VoIP EDGE.

5. Procédé selon la revendication 1, dans lequel les ressources de transmission radio de l'émetteur sont des ressources sans saut, et consistant en outre à utiliser au moins une tranche de temps des ressources de transmission radio sans saut pour le canal de commande de diffusion (BCCH), et à utiliser d'autres tranches de temps des ressources de transmission radio sans saut pour les appels comprenant des flux de paquets Voix sur protocole Internet.

6. Procédé selon la revendication 5, dans lequel l'étape consistant à demander que l'appel supplémentaire soit modifié pour passer du flux de paquets Voix sur protocole Internet à la connexion à commutation de circuits consiste à demander à la station mobile de mettre en oeuvre un transfert intercellulaire de commutation de paquets à commutation de circuits et à raccorder par conséquent l'appel sous la forme d'un appel à commutation de circuits sur des ressources de transmission radio.

7. Réseau de télécommunication comprenant :
un noeud de station de base (28) agencé de manière à fournir plusieurs ensembles de ressources de transmission radio (52) en vue de communiquer avec des stations mobiles dans une cellule, dans lequel au moins un ensemble de ressources de transmission radio de la cellule est un ensemble de ressources de transmission radio sans saut, et d'autres ensembles de ressources de transmission radio de la cellule sont des ensembles de ressources de transmission radio avec sauts, **caractérisé en ce qu'**il comporte en outre :
une unité de commande de paquets qui est agencée de manière à ordonnancer des appels comprenant des flux de paquets Voix sur protocole Internet sur les ensembles de ressources de transmission radio sans saut selon les capacités de l'ensemble de ressources de transmission radio sans saut, et qui est en outre agencée de manière à, lorsque l'ensemble de ressources de transmission radio sans saut ne dispose pas des capacités nécessaires pour un appel supplémentaire avec une station mobile, demander que l'appel supplémentaire soit modifié pour passer d'un flux de paquets Voix sur protocole Internet à une connexion à commutation de circuits.

8. Réseau de télécommunication selon la revendication 7, dans lequel l'ensemble de ressources de transmission radio sans saut comporte des ressources de transmission radio fournies par un émetteur-récepteur sans saut, et dans lequel les ressources de transmission radio fournies par l'émetteur-récepteur sans saut comprennent des tranches de temps sur une fréquence à laquelle l'émetteur-récepteur sans saut opère, et dans lequel les ensembles de ressources de transmission radio avec sauts comprennent des ressources de transmission radio fournies par les émetteurs-récepteurs avec sauts respectifs, et dans lequel les ressources de transmission radio fournies par les émetteurs-récepteurs avec sauts comprennent des tranches de temps sur les fréquences respectives auxquelles opèrent les émetteurs-récepteurs avec sauts.

9. Unité de commande de paquets pour un réseau de télécommunication qui présente plusieurs ensembles de ressources de transmission radio en vue de communiquer avec des stations mobiles dans une cellule, dans laquelle au moins un ensemble de ressources de transmission radio de la cellule est un ensemble de ressources de transmission radio sans saut, et d'autres ensembles de ressources de transmission radio de la cellule sont des ensembles de ressources de transmission radio avec sauts, et dans laquelle l'unité de commande de paquets est agencée de manière à ordonnancer des appels comprenant des flux de paquets Voix sur protocole Internet sur les ensembles de ressources de transmission radio sans saut selon les capacités de l'ensemble de ressources de transmission radio sans saut, et qui est **caractérisée en ce qu'**elle est agencée de manière à, lorsque l'ensemble de ressources de transmission radio sans saut ne dispose pas des capacités nécessaires pour un appel supplémentaire avec une station mobile, demander que l'appel supplémentaire soit modifié pour passer d'un flux de paquets Voix sur protocole Internet à une connexion à commutation de circuits.

10. Unité de commande de paquets selon la revendication 9, dans laquelle l'ensemble de ressources de transmission radio sans saut comporte des ressources de transmission radio fournies par un émetteur-récepteur sans saut, et dans laquelle les ressources de transmission radio fournies par l'émetteur-récepteur sans saut comprennent des tranches de temps sur une fréquence à laquelle l'émetteur-récepteur sans saut opère, et dans laquelle les ensembles de ressources de transmission radio avec sauts comprennent des ressources de transmission radio fournies par les émetteurs-récepteurs avec sauts respectifs, et dans laquelle les ressources de transmission radio fournies par les émetteurs-récepteurs avec sauts comprennent des tranches de temps sur les fréquences respectives auxquelles opèrent les émetteurs-récepteurs avec sauts.

11. Réseau de télécommunication selon la revendication 7 ou unité de commande de paquets selon la revendication 9, dans lequel/laquelle, pour demander que l'appel supplémentaire soit modifié d'un flux de paquets Voix sur protocole Internet à une connexion à commutation de circuits, l'unité de commande de paquets est configurée de manière à demander à la station mobile de mettre en oeuvre un transfert intercellulaire de commutation de paquets à commutation de circuits et à raccorder par conséquent l'appel supplémentaire sous la forme d'un appel à commutation de circuits sur l'un des ensembles de ressources de transmission radio avec sauts de la cellule.

12. Réseau de télécommunication selon la revendication 7 ou unité de commande de paquets selon la revendication 9, dans lequel/laquelle les ensembles de ressources de transmission radio avec sauts présentent des taux de réutilisation supérieurs, parmi d'autres cellules du réseau, relativement à ceux de l'ensemble de ressources de transmission radio sans saut.

13. Réseau de télécommunication selon la revendication 7 ou unité de commande de paquets selon la revendication 9, dans lequel/laquelle les appels comprenant des flux de paquets Voix sur protocole Internet sont des flux VoIP EDGE.

14. Réseau de télécommunication selon la revendication 7 ou unité de commande de paquets selon la revendication 9, dans lequel/laquelle l'unité de commande de paquets est au moins partiellement située au niveau d'un noeud de contrôleur de station de base (26).

15. Réseau de télécommunication selon la revendication 7 ou unité de commande de paquets selon la revendication 9, dans lequel/laquelle l'unité de commande de paquets est au moins partiellement située au niveau d'un noeud de station de base (28).

16. Réseau de télécommunication selon la revendication 7 ou unité de commande de paquets selon la revendication 9, dans lequel l'unité de commande de paquets est au moins partiellement située au niveau d'un noeud de support GPRS.
